# EUROPÄISCHE PATENTSCHRIFT

(11) **EP 3 905 731 B1**
(45) Veröffentlichungstag und Bekanntmachung des Hinweises auf die Patenterteilung: **23.08.2023**
(21) Anmeldenummer: 21166587.2
(22) Anmeldetag: 01.04.2021
(51) Int. Cl.: H04W 4/38, H04W 12/106, H04L 9/32, H04L 9/40, H04L 9/12, H04W 12/12, H04L 67/12

(54) **VERFAHREN ZUR SYNCHRONISIERUNG VON FRAME-COUNTER UND ANORDNUNG**
METHOD FOR SYNCHRONIZING FRAME COUNTER AND ARRANGEMENT
PROCÉDÉ DE SYNCHRONISATION DU COMPTEUR PAR TRAME ET AGENCEMENT

(30) Priorität: 02.05.2020 DE 102020002636
(43) Veröffentlichungstag der Anmeldung: 03.11.2021
(73) Patentinhaber: Diehl Metering Systems GmbH, 90451 Nürnberg (DE)
(72) Erfinder: Meyer, Benjamin, 90419 Nürnberg (DE); Jambor, Christian, 90449 Nürnberg (DE)
(74) Vertreter: Diehl Patentabteilung

(56) Entgegenhaltungen:
- US-A1- 2011 116 502
- YANG XUEYING ET AL: "Security Vulnerabilities in LoRaWAN", 2018 IEEE/ACM THIRD INTERNATIONAL CONFERENCE ON INTERNET-OF-THINGS DESIGN AND IMPLEMENTATION (IOTDI), IEEE, 17. April 2018 (2018-04-17), Seiten 129-140, XP033350844, DOI: 10.1109/IOTDI.2018.00022 [gefunden am 2018-05-25]
- TSAI KUN-LIN ET AL: "Secure Session Key Generation Method for LoRaWAN Servers", IEEE ACCESS, IEEE, USA, Bd. 8, 2. März 2020 (2020-03-02), Seiten 54631-54640, XP011780250, DOI: 10.1109/ACCESS.2020.2978100 [gefunden am 2020-03-24]
- SINGH R ET AL: "Protocol Support for High Availability of IKEv2/IPsec; rfc6311.txt", PROTOCOL SUPPORT FOR HIGH AVAILABILITY OF IKEV2/IPSEC; RFC6311.TXT, INTERNET ENGINEERING TASK FORCE, IETF; STANDARD, INTERNET SOCIETY (ISOC) 4, RUE DES FALAISES CH- 1205 GENEVA, SWITZERLAND, 14 July 2011 (2011-07-14), pages 1-26, XP015076082, [retrieved on 2011-07-14]

## Beschreibung

Die vorliegende Erfindung betrifft ein Verfahren zur Synchronisierung von Frame-Counter, zum Schutz von Datenübertragungen gemäß dem Oberbegriff des Anspruchs 1. Ferner betrifft die vorliegende Erfindung eine Anordnung zum Übertragen von Daten gemäß dem Oberbegriff des Anspruchs 12.

### Technologischer Hintergrund

Die Datenübertragung von Messeinheiten, wie z. B. Sensoren, Verbrauchsmessern bzw. Verbrauchsdatenerfassungsgeräten oder Komponenten von Smart-Home-Steuerungen, gewinnt im täglichen Gebrauch zunehmend an Bedeutung. Ein wichtiger Anwendungsbereich von Messeinheiten ist der Einsatz von intelligenten Verbrauchsdatenerfassungsgeräten, sogenannten Smart Metern. Diese sind in der Regel in ein Versorgungsnetz eingebundene Verbrauchsdatenerfassungsgeräte, z. B. für Energie, Strom, Gas oder Wasser, die dem jeweiligen Anschlussbenutzer den tatsächlichen Verbrauch anzeigen und ein Kommunikationsnetz zur Übertragung der Verbrauchsdaten an den Versorger nutzen. Intelligente Verbrauchsdatenerfassungsgeräte haben den Vorteil, dass manuelle Ablesungen der Zählerstände entfallen und seitens des Versorgers kurzfristigere Rechnungstellungen gemäß dem tatsächlichen Verbrauch vorgenommen werden können. Auch können die Versorgungsnetze wesentlich besser ausgelastet werden.

Gattungsgemäße Verbrauchsdatenerfassungsgeräte übertragen die anfallenden Messdaten in der Regel in Form von Datenpaketen oder Datentelegrammen per Funk, beispielsweise im SRD (Short Range Devices)- oder ISM (Industrial, Scientific, Medical)-Frequenzbereich an übergeordnete Datensammler (z. B. Konzentratoren, Netzwerkknotenpunkte oder Schaltzentralen eines Versorgers). Datentelegramme sind in der Regel aus einer Mehrzahl von Datenpaketen aufgebaut.

Die SRD- oder ISM-Frequenzbereiche haben den Vorteil, dass diese lizenzfrei sind und für die Nutzung lediglich eine allgemeine Zulassung der Frequenzverwaltung notwendig ist.

Elektronische Verbrauchsdatenerfassungsgeräte mit Funksender für drahtlose Datenübertragung werden häufig für eine Walk-In-, Walk-By-, Drive-By- oder Fly-By-Ablesung verwendet. Hierfür werden die Erfassungsgeräte mittels eines mobilen Funkempfängers durch Kundendienstpersonal von einem Fahrzeug aus (Drive-By) im Vorbeifahren oder zu Fuß (Walk-By) im Vorbeigehen abgelesen, ohne dass das abzulesende Gebäude betreten werden muss. Bei den intelligenten Verbrauchsdatenerfassungsgeräten ist zum einen der Energieverbrauch, da diese meist batteriegesteuert sind und möglichst lange Wartungsintervalle aufweisen sollen, und zum anderen die Betriebssicherheit von entscheidender Bedeutung.

Long Range Wide Area Network (LoRaWAN) ist ein Low-Power-Wireless-Netzprotokoll, welches regional unterschiedliche Frequenzbereiche im ISM-Band und im SRD-Band verwendet. Die LoRa Alliance legt die LoRaWAN-Spezifikation fest. Bei LoRaWAN werden drei Zähler (Counter), sogenannte Frame Counter verwendet, um die Uplink und Downlink Datennachrichten nachverfolgen zu können. FCntUp zählt dabei die Uplink-Datennachrichten und wird mit jedem Uplink inkrementiert. NFCntDown zählt Datennachrichten im Downlink, die nur MAC-Befehle enthalten. AFCntDown zählt Downlink-Datenmeldungen die Anwendungsdaten tragen. Der FCntUp-Wert wird im FCnt-Feld der Uplink-Nachrichten gesendet. Das empfangende Netzwerkelement synchronisiert den FCntUp-Zähler für das Endgerät mit dem empfangenen Wert. In ähnlicher Weise wird entweder NFCntDown oder AFCntDown im FCnt-Feld der Downlink-Nachrichten gesendet und das empfangende Endgerät synchronisiert den entsprechenden lokalen Zähler mit dem empfangenen Wert. In beiden Fällen erfolgt die Synchronisation nur, wenn die Nachricht authentifiziert wird, und der empfangene Zählerwert wird im Vergleich zum lokalen Zählerwert inkrementiert, der den zuvor gültigen Wert darstellt.

Bisherige Lösungen zur Synchronisierung von Frame-Counter umfassen die Zeitsynchronisierung zwischen zwei Endgeräten oder die Verwendung von Zufallszahlen bzw. Nonces in den übertragenen Daten. Für die Zeitsynchronisierung werden Zeitstempel zwischen den Endgeräten ausgetauscht. Hierfür sendet ein Endgerät einen eigenen Zeitstempel in den verschlüsselten Nutzdaten und das andere Endgerät überprüft die Plausibilität des Zeitstempels. Dies hat allerdings den Nachteil, dass bei einem schnellen Datenaustausch, also einem kurzen Sende- und/oder Empfangsfenster, die Performance nicht immer gewährleistet werden kann. Zudem muss der Zeitstempel des Endgerätes genau genug sein, um für eine Zeitsynchronisierung verwendet werden zu können. Bei Verwendung von Zufallszahlen bzw. Nonces schickt das eine Endgerät eine zufällige Zahl an das andere Endgerät, woraufhin dieses Endgerät die empfangene Zahl in den verschlüsselten Nutzdaten der Antwort einträgt, um sich zu authentifizieren. Hierbei besteht der Nachteil, dass bei der Generierung von Zufallszahlen eine ausreichende Entropie gewährleistet werden muss und zudem ein Pufferspeicher für die bereits generierten Zufallszahlen geführt werden muss, damit eine Überprüfung der Antwort erfolgen kann. Dadurch erhöht sich die Komplexität des Prozesses der Datenübertragung. Es besteht somit das Bedürfnis, die Synchronisierung von Frame-Counter zu vereinfachen, ohne Einbußen in der Übertragungssicherheit.

### Druckschriftlicher Stand der Technik

Die WO 2018/230147 A1 offenbart ein Verfahren zur Generierung eines Nachrichtenauthentifizierungscodes (Message Integrity Code). Dieser wird zum Schutz von Wake-Up-Nachrichten (WUR) vor Replay-Angriffen verwendet. Um Replay-Angriffe zu verhindern, muss der Sender sicherstellen, dass jede MIC-Berechnung eine eindeutige Eingabe bzw. Zufallszahl (Salt oder Nonce) verwendet, die für jede Wake-Up-Nachricht unterschiedlich ist. Die Wake-Up-Nachricht wird durch Ersetzen des Adress-Feldes mit dem Nachrichtenauthentifizierungscode geschützt.

Die Veröffentlichung von SeungJae Na, DongYeop Hwang, WoonSeob Shin and Ki-Hyung Kim, "Scenario and countermeasure for replay attack using join request messages in LoRaWAN" 2017 International Conference on Information Networking (ICOIN), Da Nang, 2017, pp. 718-720 untersucht die Möglichkeit der Ausnutzung des Join-Prozesses, aufgrund von Sicherheits-Schwachstellen. Es wird ein möglicher Replay-Angriff über abgefangene Join-Anfragen beschrieben. Als Gegenmaßnahme wird die Verwendung eines Tokens vorgeschlagen, der die verwendete DevNonce sowie die MIC der Join-Anfrage maskiert. Die maskierten Join-Anfragen werden vom Endgerät an den Netzwerk-Server gesendet, der die Maskierung aufhebt.

In der WO 2015/049138 A1 werden Methoden und Systeme zur sicheren Übertragung von Zeitsynchronisationspaketen durch einen Master-Knoten in einer Netzwerkumgebung beschrieben. Das Verfahren umfasst die Erzeugung einer Zeitpaketmarkierung einer vorgegebenen Bitgröße durch einen Prozessor. Das Verfahren umfasst ferner die Verschlüsselung der Zeitpaketmarkierung durch den Prozessor mit einer leichten Verschlüsselungstechnik, um eine Mastersignatur zu erzeugen. Ferner umfasst das Verfahren das Anhängen der Hauptsignatur durch den Prozessor an ein verschlüsseltes Zeitsynchronisationspaket, das durch den Master-Knoten erzeugt wird, um ein erweitertes verschlüsseltes Paket zu erhalten, wobei das verschlüsselte Zeitsynchronisationspaket einen Sendezeitstempel für die Zeitsynchronisation enthält. Das Verfahren umfasst ferner die Übertragung des erweiterten verschlüsselten Pakets durch den Master-Knoten an einen Slave-Knoten in der Netzwerkumgebung zur Zeitsynchronisation.

Die WO 2019/154136 A1 beschreibt ein Verfahren zum Betreiben einer Station, die einem Zugangsknoten zugeordnet ist. Das Verfahren beinhaltet das Empfangen einer oder mehrerer Wake-Up-Funk-Beacons, wobei der eine oder die mehreren Beacons jeweils eine Zeitinformation und eine dem Zugangsknoten zugeordnete Kennung umfassen, und wobei die Station so konfiguriert ist, dass sie die Beacons zu dieser ersten Zeitinformation mit einem Empfänger empfängt und dem Zugangsknoten Informationen über den einen oder die mehreren Beacons meldet, wobei die Informationen mindestens eine von zweiten Zeitinformationen, Signalqualitätsinformationen oder Fehlerinformationen umfassen. Die Veröffentlichung von Internet Engineering Task Force (IETF) RFC6311 offenbart "Protocol Support for High Availability of IKEv2/IPsec", wobei der selbe Marker ("Nonce") sowohl in der Anfrage als auch in der Antwort vorhanden ist.

### Aufgabe der vorliegenden Erfindung

Die Aufgabe der vorliegenden Erfindung besteht darin, ein neuartiges Verfahren zum Schutz von Datenübertragungen sowie eine entsprechende Anordnung zur Verfügung zu stellen, bei dem bei einer vorteilhaften Energieeffizienz gleichzeitig eine erhöhte Betriebsflexibilität bei verringerter Komplexität ermöglicht wird.

### Lösung der Aufgabe

Die vorstehende Aufgabe wird durch die gesamte Lehre des Anspruchs 1 sowie durch eine Anordnung gemäß Anspruch 12 gelöst. Zweckmäßige Ausgestaltungen der Erfindung sind in den Unteransprüchen beansprucht.

Erfindungsgemäß ist ein Verfahren zur Synchronisierung von Frame-Counter (FC) vorgesehen, welches zum Schutz von Datenübertragungen zwischen einem ersten Endgerät, insbesondere einem Endpunkt, insbesondere einem Sensor, insbesondere Smart Meter, insbesondere Verbrauchszähler, und einem zweiten Endgerät, insbesondere einer Basisstation, insbesondere Datensammler, insbesondere einem mobilen Auslesesystem, dient, wobei Datenframes, zwischen erstem Endgerät und zweitem Endgerät ausgetauscht werden, wobei zur Sicherung des Datenaustausches zwischen ersten Endgerät und zweitem Endgerät die Datenframes mit Frame Counter (FC) versehen werden, wobei kennzeichnenderweise das zweite Endgerät einen ersten Datenframe, insbesondere einen Wake-up Datenframe, an das erste Endgerät sendet, wobei der erste Datenframe einen Marker umfasst, insbesondere in den Nutzdaten, das erste Endgerät einen zweiten Datenframe als Antwort an das zweite Endgerät zurücksendet, wobei der zweite Datenframe in den Kopfdaten einen Frame-Counter (FC) umfasst, und der zweite Datenframe in den, insbesondere verschlüsselten, Nutzdaten, den Frame-Counter (FC) sowie den Marker umfasst.

Die Erfindung bietet den Vorteil, dass der Marker vom zweiten Endgerät zur Verfügung gestellt wird. Das zweite Endgerät kann in seiner Funktion insbesondere eine Basisstation, ein Datensammler oder ein mobiles Auslesesystem sein, welches Daten, Datenframes oder insbesondere Verbrauchsdaten vom ersten Endgerät ausliest. Das erste Endgerät kann insbesondere ein Endpunkt, ein Sensor, ein Smartmeter oder ein Verbrauchszähler sein, welches Daten, insbesondere Verbrauchsdaten, zum Abruf bereithält.

Zum Schutz gegen Replay-Attacken kann die Verwendung von Frame-Counter dienen. Allerdings ist wiederum die Initialisierung von Frame-Counter bzw. deren Synchronisierung anfällig gegenüber Replay-Attacken. Die vorliegende Erfindung bietet solch eine Lösung.

In einem möglichen Anwendungsfall steht das zweite Endgerät nicht ständig mit dem ersten Endgerät in Verbindung, sondern nur in der Zeit der Datenauslesung. Die Synchronisierung der Frame-Counter zwischen beiden Geräten dient somit der Wiederaufnahme der Kommunikation bzw. des Datenaustausches. Vorzugweise können das erste und zweite Endgerät bereits zu einem früheren Zeitpunkt eine Kommunikation bzw. Netzwerksitzung (Session) etabliert haben, wobei in diesem Zuge die Frame-Counter beispielsweise auf den Wert null (0) zurückgesetzt worden sind. Die Erfindung bietet den Vorteil, dass nun bei einem erneuten Kommunikationsaufbau die letzten gültigen Frame-Counter Werte bzw. deren Inkremente weiterverwendet werden können, ohne dass ein erneutes Zurücksetzten der Frame-Counter notwendig wird, und gleichzeitig ein ausreichender Schutz gegen Replay-Attacken besteht.

Es besteht die Möglichkeit, dass die Endgeräte nicht in ständigem Kontakt stehen. So könnte der Fall eintreten, dass vom ersten Endgerät bereits Nachrichten mit höheren Frame-Counter versendet worden sind, welche nicht durch das zweite Endgerät empfangen wurden. Diese nicht empfangenen Nachrichten könnten allerdings von einer dritten Partei abgefangen worden sein und als Replay-Angriff gegen das zweite Endgerät bei einer erneuten Kontaktaufnahme verwendet werden. Dieser Angriffsvektor wird durch die vorliegende Erfindung behoben, indem eine Synchronisierung der Frame-Counter von erstem und zweitem Endgerät stattfindet, bevor ein, insbesondere durch Frame-Counter geschützter, Datenaustausch zwischen beiden Endgeräten stattfindet.

Die Synchronisierung von Frame-Counter kann bei einem ersten Kommunikationsaufbau zwischen zwei Endgeräten angewendet werden oder wenn bereits ein Datenaustausch zwischen beiden Endgeräten in der Vergangenheit stattgefunden hat. So kann die Synchronisierung auch als für ein neues Setup oder eine Initialisierung von Frame-Counter verwendet werden.

Vorzugsweise wird die Synchronisierung der Frame-Counter vom zweiten Endgerät angestoßen. Das zweite Endgerät kann hierfür zweckmäßigerweise einen Wake-Up-Frame oder einen Sync-Frame aussenden.

Der Marker wird somit nur für den Aufbau bzw. den Wiederaufbau einer Kommunikation zwischen erstem und zweitem Endgerät verwendet bzw. in die Datenframes eingepflegt. Nachdem dieser initiale Austausch stattgefunden hat, können Frame-Counter als Schutz vor Replay-Attacken dienen. Es besteht somit der Vorteil, dass der Marker nicht für jeden Datenaustausch abgewandelt bzw. neu erstellt werden muss. Der Marker kann vorteilhafterweise nur zu Beginn einer neuen Netzwerksitzung (Session) bzw. eines erneuten Verbindungsaufbaus ausgetauscht und verifiziert werden. Die Nachteile eines Zeitstempels, welcher ständig aktuell bzw. synchron gehalten werden müsste, sowie einer Zufallszahl bzw. Nonce, deren zufällige Generierung und Speicherung sichergestellt werden müsste, entfallen vorteilhafterweise.

Besonders zweckmäßig ist es, dass das zweite Endgerät den zweiten Datenframe empfängt und den Frame-Counter (FC) in den Kopfdaten mit dem Frame-Counter (FC) in den Nutzdaten abgleicht, sowie den Marker im ersten Datenframe mit dem Marker in den Nutzdaten des zweiten Datenframes abgleicht, und bei Übereinstimmung der Frame-Counter (FC) und der Marker das erste Endgerät als vertrauenswürdig einstuft.

Durch das Zurücksenden des Markers wird sichergestellt, dass es sich um eine authentische Antwort des ersten Endgeräts auf die Anfrage des zweiten Endgeräts, in der dieser Marker mitgesendet wurde, handelt. Somit kann ausgeschlossen werden, dass es sich um eine zuvor von einer dritten Partei aufgezeichnete Antwort des ersten Endgeräts handelt, welche im Zuge eines Replay-Angriff als Antwort auf die Anfrage durch das zweite Endgerät verwendet wird.

Vorzugsweise kann es sich bei dem Marker um einen Zeitstempel (t) handeln, wobei der Zeitstempel (t) die aktuelle Zeit zum Sendezeitpunkt des ersten Datenframes darstellt, und der Zeitstempel (t) im zweiten Datenframe auf Plausibilität geprüft wird, wobei hierfür der Sendezeitpunkt des ersten Datenframes sowie Verzögerungen in der Übertragung und/oder der Verarbeitung im ersten Endgerät berücksichtigt werden.

Das erste Endgerät kann beispielsweise ungenauen Zeitgeber besitzen, beispielsweise einen Schwingquarz geringer Güte, so dass die interne Uhr des ersten Endgeräts von der des zweiten Endgeräts abweicht. Das zweite Endgerät kann vorteilhafterweise einen genauen Zeitgeber, beispielsweise in der Form eines Schwingquarz mit hoher Güte, besitzen. Das erste Endgerät kann zweckmäßigerweise energie-autark betrieben werden, so dass ein geringer Energieverbrauch wünschenswert ist. Es kann sich beim ersten Endgerät insbesondere um ein "constrained device" handeln.

Der im zweiten Datenframe zurückgesendete Zeitstempel (t) kann der bereits im ersten Datenframe empfangene Zeitstempel (t) sein. Alternativ besteht die Möglichkeit, dass das erste Endgerät im zweiten Datenframe einen Zeitstempel (t*) basierend auf der eigenen internen Uhr des ersten Endgeräts zurücksendet. Aufgrund eines ungenaueren Zeitgebers kann die interne Uhr des ersten Endgeräts von der des zweiten Endgeräts abweichen, so dass diese Diskrepanz ebenfalls bei der Überprüfung auf Plausibilität Berücksichtigung findet.

Es besteht der Vorteil, dass nicht periodisch bzw. bei jeder Übertragung ein Zeitstempel mitgeschickt werden muss, sondern lediglich für die Synchronisierung der Frame-Counter. Für den weiteren Datenaustausch ist anschließend die Verwendung der Frame-Counter als Absicherung gegen Replay-Attacken ausreichend. Somit besteht für das erste Endgerät nicht die Notwendigkeit eines genauen Zeitstempels. Die gesamte Performance des Systems ist somit nicht von der Zeitsynchronisierung bzw. der Genauigkeit des Zeitstempels des ersten Endgeräts abhängig.

Das übertragende Endgerät führt eine Überprüfung durch, um eine Abweichung zwischen dem gesendeten Zeitstempel und dem empfangenen Zeitstempel festzustellen. Eine gewisse Abweichung kann dabei erlaubt sein, um Übertragungsverzögerungen und/oder Verarbeitungsverzögerungen oder andere weitere Einfluss- bzw. Störfaktoren zu berücksichtigen. Es kann somit ausreichend sein, wenn der Zeitstempel auf Plausibilität überprüft wird.

Alternativ kann es sich bei dem Marker um einen Token handeln, wobei der Token durch das zweite Endgerät vor dem Senden des ersten Datenframes erzeugt wird, indem eine zufällige Zahl einmalig für die Synchronisierung generiert wird und als Token im ersten Datenframe dient.

Die Verwendung eines Tokens als Marker bietet eine weitere Möglichkeit für das Authentifizieren des Endgeräts. Hierfür kann eine zufällige Zahl (Nonce) zu Beginn der Kommunikation zwischen beiden Endgeräten vom zweiten Endgerät generiert werden. Diese zufällige Zahl wird als Token im ersten Datenframe vom zweiten Endgerät zum ersten Endgerät gesendet. In der entsprechenden Antwort vom ersten Endgerät zum zweiten Endgerät wird dieser Token vom ersten Endgerät integriert. Neben dem Token können zweckmäßigerweise zudem die Frame-Counter und beispielsweise der Zählerstand im Falle eines Verbrauchszählers integriert werden. Die erfolgreiche Überprüfung des Tokens im zweiten Endgerät kann den Inhalt der Antwort validieren. Dadurch wird beispielsweise der mitgesendete Zählerstand als gültig wahrgenommen und die synchronisierten Frame-Counter können für die weitere Kommunikation mit dem ersten Endgerät genutzt werden.

Es besteht zudem die Möglichkeit, dass der Token als Network Session Key in der Kommunikation zwischen beiden Endgeräten dient. Als Nonce kann alternativ eine Client Nonce (cnonce) verwendet werden. In einer alternativen Ausgestaltung besteht die Möglichkeit, dass der Marker einen Zeitstempel sowie eine Zufallszahl und/oder Nonce umfasst.

Vorzugsweise können weitere Datenframes vom ersten Endgerät zum zweiten Endgerät inkrementierte Frame-Counter (FC+) umfassen, welche für jeden weiteren Datenframe inkrementiert werden, und, nach der Einstufung des ersten Endgeräts als vertrauenswürdig, die Gültigkeit der weiteren Datenframes vom ersten Endgerät im zweiten Endgerät durch den Abgleich des im weiteren Datenframe enthaltenen inkrementieren Frame-Counters (FC+) mit dem Inkrement des Frame-Counters (FC) des diesem weiteren Datenframe vorhergehenden Datenframes abgeglichen wird, und, der weitere Datenframe bei Übereinstimmung des Frame-Counters (FC) mit dem inkrementierten Frame-Counter (FC+) als gültig eingestuft wird.

Bei dem vorhergehende Datenframe kann es sich um den zweiten Datenframe handeln, welcher zur Synchronisierung der Frame-Counter verwendet wurde oder um einen Datenframe, der nach der Synchronisierung der Frame-Counter versendet wurde und dessen Gültigkeit alleine durch den mitgesendeten Frame-Counter validiert wurde.

Zweckmäßigerweise kann es sich bei dem Frame-Counter (FC) in den Kopfdaten im zweiten Datenframe und bei dem Frame-Counter (FC) in den Nutzdaten des zweiten Datenframes um einen Frame-Counter für den Uplink (FCUp) handeln. Es besteht somit die Möglichkeit, dass das zweite Endgerät den zweiten Datenframe empfängt und den Frame-Counter für den Uplink (FCUp) in den Kopfdaten mit dem Frame-Counter für den Uplink (FCUp) in den Nutzdaten abgleicht, sowie den Marker im ersten Datenframe mit dem Marker in den Nutzdaten des zweiten Datenframes abgleicht, und bei Übereinstimmung der Frame-Counter für den Uplink (FCUp) und der Marker das erste Endgerät als vertrauenswürdig einstuft. Zudem besteht die Möglichkeit, dass der zweite Datenframe, insbesondere in den Nutzdaten, einen Frame-Counter für den Downlink (FCDown) umfasst. Damit kann vorteilhafterweise zwischen Frame-Counter, die im Uplink, also vom ersten Endgerät zum zweiten Endgerät, verwendet wurden und Frame-Counter, die im Downlink, also vom zweiten Endgerät zum ersten Endgerät, verwendet wurden unterschieden werden. Die Synchronisierung kann vorteilhafterweise den Abgleich der Werte der Frame-Counter jeweils für den Uplink und/oder den Downlink für beide Endgeräte umfassen.

Es ist ferner darauf zu achten, dass es zu keinem Überlauf von Frame Counter kommt, damit es zu keiner Wiederverwendung von bereits verwendeten Frame-Counter kommt. Sofern ein Überlauf absehbar ist, kann die Notwendigkeit bestehen eine neue Session einzurichten. Das erfindungsgemäße Verfahren kann auch für die Synchronisierung von einem neuen Satz an Frame-Counter verwendet werden, sofern bereits eine erste Kommunikation eingerichtet war und der bestehende Frame-Counter droht überzulaufen. Eine Netzwerksitzung kann den Wert die Frame-Counter für den Uplink und für den Downlink umfassen.

Vorteilhafterweise kann es sich bei dem zweiten Endgerät um ein mobiles Endgerät handeln, wobei sich das erste Endgerät und das zweite Endgerät mit einer Relativgeschwindigkeit zueinander bewegen. Das erfindungsgemäße Verfahren zur Synchronisierung von Frame-Counter ist schlank ausgestaltet, um auch bei Relativgeschwindigkeiten die gewünschte Performance zu leisten. Es zeichnet sich für diesen Anwendungsfall besonders aus, da lediglich für die Synchronisierung vom Frame-Counter ein Marker, insbesondere ein Zeitstempel und/oder eine Zufallszahl, verwendet wird und die weitere Kommunikation alleine durch Frame-Counter gegen Replay-Attacken abgesichert werden kann. Es entfällt somit beispielsweise eine aufwendige Zeitsynchronisation zwischen den Endgeräten. Diese wäre bei der Verwendung von Zeitstempeln für jeden Datenframe notwendig. Erfindungsgemäß bedarf es beispielsweise nur in einem Datenframe eines Zeitstempels, welcher die Funktion eines Markers übernimmt. Ferner bedarf es vorteilhafterweise auch keiner zusätzlichen Komplexität, wie sie durch die Verwendung von Zufallszahlen bzw. Nonces bestehen würde. Hierbei wäre die Generierung von Zufallszahlen für jeden Datenframe notwendig, sowie deren Speicherung für einen zukünftigen Abgleich. Die Generierung einer Zufallszahl ist beispielsweise in der vorliegenden Erfindung lediglich für einen Datenframe notwendig.

Die Relativgeschwindigkeit kann zweckmäßigerweise bis zu 70 Kilometer pro Stunde, insbesondere bis zu 50 Kilometer pro Stunde, betragen. Somit ist es möglich, beispielsweise auch aus einem Fahrzeug heraus Daten auszulesen. Dies hat zum Vorteil, dass das Auslesen nicht von der Geschwindigkeit der Vorbeibewegung abhängig ist. Zudem ist es vorteilhaft, dass für den Datenaustausch die Relativgeschwindigkeit um weniger als 50%, insbesondere um weniger als 20%, insbesondere um weniger als 10% verringert wird, insbesondere keine Verringerung der Relativgeschwindigkeit stattfindet. Zweckmäßigerweise ist es somit nicht notwendig, die Geschwindigkeit bzw. die Fahrweise während des Auslesens durch den Ausleseempfänger anzupassen.

Nebengeordnet beansprucht die vorliegende Erfindung eine Anordnung zum Übertragen von Daten, umfassend mindestens ein erstes Endgerät sowie ein zweites Endgerät, wobei das erste Endgerät und das zweite Endgerät jeweils Kommunikationsmittel umfassen, um Datenframes, zwischen erstem Endgerät und zweitem Endgerät auszutauschen, wobei zur Sicherung des Datenaustausches zwischen erstem Endgerät und zweitem Endgerät die Datenframes mit Frame-Counter (FC) versehen werden, wobei kennzeichnenderweise zum Schutz von Datenübertragungen eine Synchronisierung von Frame-Counter (FC) nach einem Verfahren gemäß mindestens einem der vorhergehenden Ansprüche durchführbar ist.

Durch die Anordnung besteht die Möglichkeit, dass zwischen dem ersten und zweiten Endgerät auf einfache Weise eine Synchronisierung von Frame-Counter durchgeführt werden kann. Es bietet den weiteren Vorteil, dass diese Synchronisierung nicht auf ein erstes Endgerät beschränkt ist, so dass das zweite Endgerät mit einer Mehrzahl von ersten Endgeräten eine Synchronisierung von Frame-Counter durchführen kann. Für jede Verbindung zwischen zweitem Endgerät und einem ersten Endgerät wird ein separater Frame-Counter bzw. separate Frame-Counter für den Uplink oder Downlink verwendet.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine einfache schematische Darstellung einer Synchronisierung von Frame-Counter;
- Fig. 2: eine einfache schematische Darstellung einer Synchronisierung von Frame-Counter bei Verwendung eines Zeitstempels als Marker; und
- Fig. 3: eine einfache schematische Darstellung einer Synchronisierung von Frame-Counter bei Verwendung einer Zufallszahl als Marker.

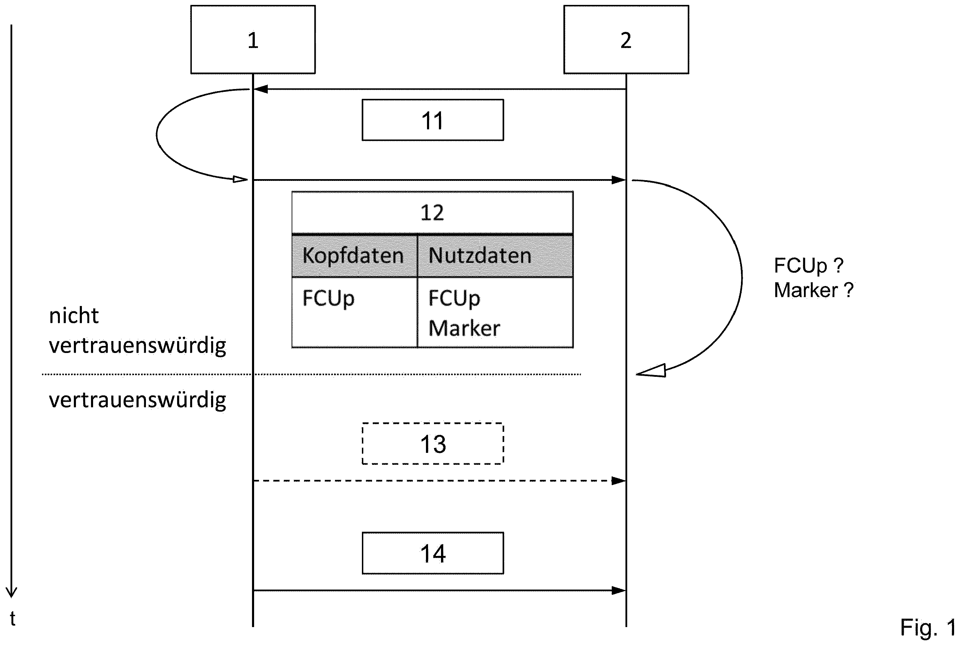

In Fig. 1 ist eine einfache schematische Darstellung einer Synchronisierung von Frame-Counter gezeigt. Bezugsziffer 1 in Fig. 1 bezeichnet ein erstes Endgerät und Bezugsziffer 2 ein zweites Endgerät. Das zweite Endgerät 2 sendet einen ersten Datenframe 11 an das erste Endgerät 1. Dieser erste Datenframe 11 ist z. B. ein Wake-up Datenframe. Der erste Datenframe11 umfasst in seinen Nutzdaten einen Marker 20. Das erste Endgerät 1 empfängt den ersten Datenframe 11 und sendet daraufhin eine Antwort an das zweite Endgerät 2 in der Form eines zweiten Datenframes 12. Der zweite Datenframe 12 umfasst Kopfdaten sowie Nutzdaten. Die Nutzdaten sind verschlüsselt. In den Kopfdaten wird der aktuelle Frame-Counter FC übertragen. Bei dem Frame-Counter FC kann es sich vorzugsweise um den Frame-Counter für den Uplink FCUp handeln. In den Nutzdaten des zweiten Datenframes 12 wird ebenfalls der aktuelle Frame-Counter FC bzw. Frame-Counter für den Uplink FCUp übertragen. Ebenfalls in den Nutzdaten des zweiten Datenframes 12 befindet sich der Marker 20. Der Frame-Counter FC sowie der Marker 20 in den Nutzdaten werden verschlüsselt übertragen. Nach dem Empfang des zweiten Datenframes 12 werden die Nutzdaten im zweiten Endgerät 2 entschlüsselt und überprüft. Hierfür wird der Frame-Counter FC in den Kopfdaten des zweiten Datenframes 12 mit dem Frame-Counter FC in den Nutzdaten des zweiten Datenframes 12 verglichen und der Marker 20 in den Nutzdaten des zweiten Datenframes 12 mit dem im ersten Datenframe 11 gesendeten Marker 20 verglichen. Bei Übereinstimmung der Frame-Counter FC und Übereinstimmung der Marker 20 wird das erste Endgerät 1 als vertrauenswürdig eingestuft. Das zweite Endgerät 2 kann beispielsweise zum Vermerk einen entsprechenden Eintrag in seinem internen Speicher vornehmen.

Vor der Synchronisierung der Frame-Counter FC ist das erste Endgerät 1 als nicht vertrauenswürdig eingestuft und nach der erfolgreichen Synchronisierung als vertrauenswürdig. Für den weiteren Datenaustausch werden zum Schutz vor Replay-Attacken ausschließlich Frame-Counter FC verwendet. Bei weiteren Datenframes 14 vom ersten Endgerät 1 zum zweiten Endgerät 2 werden die Frame-Counter FC+ inkrementiert. Das erste Endgerät 1 ist zu diesem Zeitpunkt bereits als vertrauenswürdig eingestuft worden, so dass die Gültigkeit der weiteren Datenframes 14 durch den Abgleich der darin enthaltenen inkrementierten Frame-Counter FC+ mit dem Inkrement des Frame-Counters FC des diesem Datenframe 14 vorhergehenden Datenframes 12,13 bestimmt wird. Bei dem vorhergehenden Datenframe 12 kann es sich um den Datenframe zur Synchronisierung handeln oder um einen beliebigen Datenframe 13, der zeitlich zwischen dem Datenframe 12 zur Synchronisierung und dem weiteren Datenframe 14 übertragen wurde.

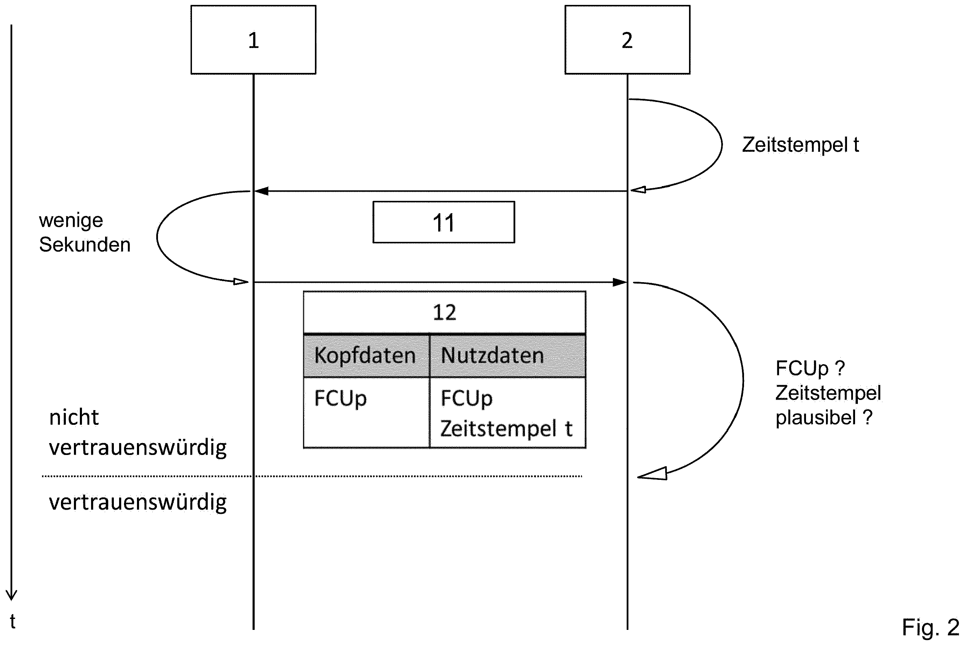

In Fig. 2 ist eine einfache schematische Darstellung einer Synchronisierung von Frame-Counter FC bei Verwendung eines Zeitstempels t als Marker 20 gezeigt. Der Zeitstempel t gibt die aktuelle Zeit im zweiten Endgerät 2 zum Sendezeitpunkt des ersten Datenframes 11 wieder. Der Zeitstempel t wird im ersten Datenframe 11 an das erste Endgerät 1 übertragen. Im ersten Endgerät 1 wird der empfangene Datenframe 11 verarbeitet und nach wenigen Sekunden eine Antwort in Form eines zweiten Datenframes 12 an das zweite Endgerät 2 gesendet. Die Verzögerung zwischen dem Empfang des ersten Datenframes 11 und dem Senden des zweiten Datenframes 12 im ersten Endgerät 1 kann beispielsweise von Störungen im Übertragungsweg und/oder durch die Verarbeitungsgeschwindigkeit des ersten Datenframes 1 beeinflusst werden. Der zweite Datenframe 12 umfasst in seinen Kopfdaten sowie in seinen Nutzdaten den aktuellen Frame-Counter FC bzw. den aktuellen Frame-Counter für den Uplink FCUp. Als Marker 20 umfasst der zweite Datenframe 12 in den Nutzdaten den vom zweiten Endgerät 2 empfangenen Zeitstempel t. Der Frame-Counter FC sowie der Zeitstempel t in den Nutzdaten werden verschlüsselt übertragen. Nach dem Empfang des zweiten Datenframes 12 werden die Nutzdaten im zweiten Endgerät 2 entschlüsselt und überprüft. Hierfür wird der Frame-Counter FC in den Kopfdaten des zweiten Datenframes 12 mit dem Frame-Counter FC in den Nutzdaten des zweiten Datenframes 12 verglichen und der Zeitstempel t in den Nutzdaten des zweiten Datenframes 12 mit dem im ersten Datenframe 11 gesendeten Zeitstempel t verglichen. Es werden hierfür die Frame-Counter FC sowie die Zeitstempel t auf Übereinstimmung überprüft. Bei den Zeitstempeln t ist keine genaue Übereinstimmung gefordert, so dass die Zeitstempel t lediglich auf Plausibilität hin überprüft werden. Für einen plausiblen Zeitstempel t wird der Sendezeitpunkt des ersten Datenframes 11 sowie Verzögerungen im Übertragungsweg und in der Verarbeitung im ersten Endgerät 1 berücksichtigt. Das erste Endgerät 1 kann beispielsweise keinen genauen Zeitgeber besitzen, beispielsweise einen Schwingquarz geringer Güte, so dass die interne Uhr des ersten Endgeräts 1 von der des zweiten Endgeräts 2 abweicht. Das zweite Endgerät 2 kann vorteilhafterweise einen genauen Zeitgeber, beispielsweise in der Form eines Schwingquarz mit hoher Güte, besitzen. Sofern die Frame-Counter FC übereinstimmen und die Zeitstempel t als plausibel eingestuft wurden, wird das erste Endgerät 1 als vertrauenswürdig eingestuft. Das zweite Endgerät 2 kann beispielsweise zum Vermerk einen entsprechenden Eintrag in seinem internen Speicher vornehmen.

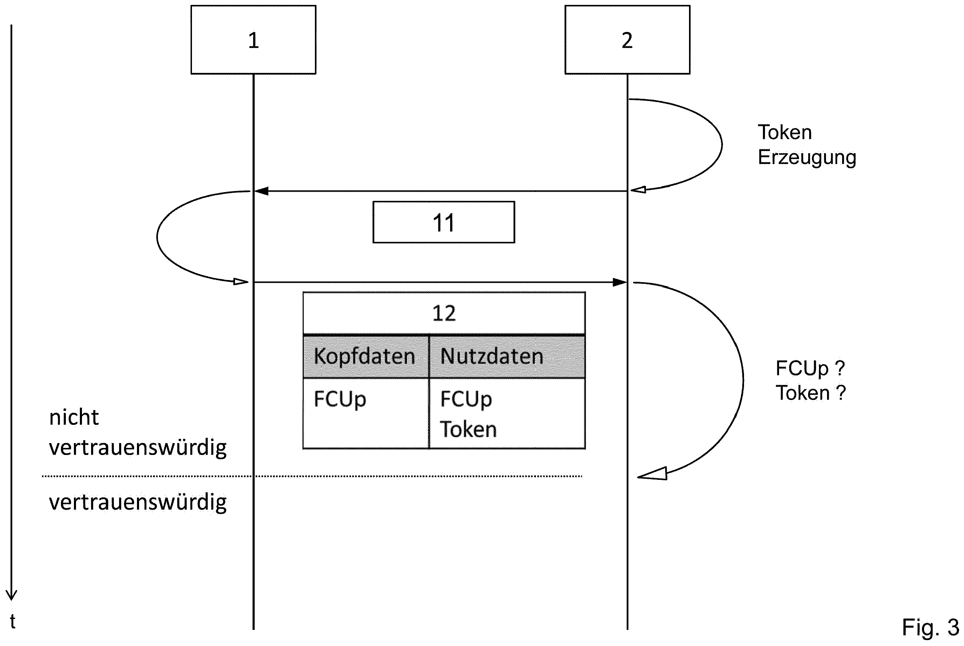

In Fig. 3 ist eine einfache schematische Darstellung einer Synchronisierung von Frame-Counter FC bei Verwendung eines Tokens Tk als Marker 20 gezeigt. Am Beginn des Synchronisierungsverfahrens wird eine zufällige Zahl bzw. Nonce im zweiten Endgerät 2 generiert. Diese Zufallszahl wird als Token Tk im Wake-up Signal für das erste Endgerät 1 verwendet. Hierfür wird der Token Tk im ersten Datenframe 11 an das erste Endgerät 1 übertragen. Im ersten Endgerät 1 wird der empfangene Datenframe 11 verarbeitet und nach wenigen Sekunden eine Antwort in Form eines zweiten Datenframes 12 an das zweite Endgerät 2 gesendet. Der zweite Datenframe 12 umfasst in seinen Kopfdaten sowie in seinen Nutzdaten den aktuellen Frame-Counter FC bzw. den aktuellen Frame-Counter für den Uplink FCUp. Als Marker 20 umfasst der zweite Datenframe 12 in den Nutzdaten den vom zweiten Endgerät 2 empfangenen Token Tk. Der Frame-Counter FC sowie der Token Tk in den Nutzdaten werden verschlüsselt übertragen. Nach dem Empfang des zweiten Datenframes 12 werden die Nutzdaten im zweiten Endgerät 2 entschlüsselt und überprüft. Hierfür wird der Frame-Counter FC in den Kopfdaten des zweiten Datenframes 12 mit dem Frame-Counter FC in den Nutzdaten des zweiten Datenframes 12 verglichen und der Token Tk in den Nutzdaten des zweiten Datenframes 12 mit dem im ersten Datenframe 11 gesendeten Token Tk verglichen. Bei Übereinstimmung der Frame-Counter FC und Übereinstimmung der Marker 20 wird das erste Endgerät 1 als vertrauenswürdig eingestuft. Das zweite Endgerät 2 kann beispielsweise zum Vermerk einen entsprechenden Eintrag in seinem internen Speicher vornehmen.

### BEZUGSZEICHENLISTE

- 1: erstes Endgerät
- 2: zweites Endgerät

- 11: erster Datenframe
- 12: zweiter Datenframe
- 13: vorhergehender Datenframe
- 14: weiterer Datenframe

- 20: Marker
- Tk: Token

- t: Zeitstempel

- FC: Frame-Counter
- FCUp: Frame-Counter für den Uplink
- FCDown: Frame-Counter für den Downlink

## Patentansprüche

1. Verfahren zur Synchronisierung von Frame-Counter (FC), zum Schutz von Datenübertragungen zwischen
einem ersten Endgerät (1), insbesondere einem Endpunkt, insbesondere einem Sensor, insbesondere Smart Meter, insbesondere Verbrauchszähler, und
einem zweiten Endgerät (2), insbesondere einer Basisstation, insbesondere Datensammler, insbesondere einem mobilen Auslesesystem, wobei
Datenframes, zwischen erstem Endgerät (1) und zweitem Endgerät (2) ausgetauscht werden, wobei
zur Sicherung des Datenaustausches zwischen ersten Endgerät (1) und zweitem Endgerät (2) die Datenframes mit Frame Counter (FC) versehen werden,
und wobei
das zweite Endgerät (2) einen ersten Datenframe (11), insbesondere einen Wake-up Datenframe, an das erste Endgerät (1) sendet, wobei
der erste Datenframe (11) einen Marker (20) umfasst, insbesondere in den Nutzdaten,
das erste Endgerät (1) einen zweiten Datenframe (12) als Antwort an das zweite Endgerät (2) zurücksendet, wobei
der zweite Datenframe (12) in den Kopfdaten einen Frame-Counter (FC) umfasst, und
der zweite Datenframe (12) in den, insbesondere verschlüsselten, Nutzdaten, den Frame-Counter (FC) sowie den Marker (20) umfasst.

2. Verfahren nach Anspruch 1, **dadurch gekennzeichnet, dass** das zweite Endgerät (2) den zweiten Datenframe (12) empfängt und den Frame-Counter (FC) in den Kopfdaten mit dem Frame-Counter (FC) in den Nutzdaten abgleicht, sowie den Marker (20) im ersten Datenframe (11) mit dem Marker (20) in den Nutzdaten des zweiten Datenframes (12) abgleicht, und bei Übereinstimmung der Frame-Counter (FC) und der Marker (20) das erste Endgerät (1) als vertrauenswürdig einstuft.

3. Verfahren nach Anspruch 2, **dadurch gekennzeichnet, dass** es sich bei dem Marker (20) um einen Zeitstempel (t) handelt, wobei der Zeitstempel (t) die aktuelle Zeit zum Sendezeitpunkt des ersten Datenframes (11) darstellt, und der Zeitstempel (t) im zweiten Datenframe (12) auf Plausibilität geprüft wird, wobei hierfür der Sendezeitpunkt des ersten Datenframes (11) sowie Verzögerungen in der Übertragung und/oder der Verarbeitung im ersten Endgerät (1) berücksichtigt werden.

4. Verfahren nach Anspruch 2, **dadurch gekennzeichnet, dass** es sich bei dem Marker (20) um einen Token (Tk) handelt, wobei der Token (Tk) durch das zweite Endgerät (2) vor dem Senden des ersten Datenframes (11) erzeugt wird, indem eine zufällige Zahl einmalig für die Synchronisierung generiert wird und als Token (Tk) im ersten Datenframe (11) dient.

5. Verfahren nach mindestens einem der Ansprüche 2 bis 4, **dadurch gekennzeichnet, dass** weitere Datenframes (14) vom ersten Endgerät (1) zum zweiten Endgerät (2) inkrementierte Frame-Counter (FC+) umfassen, welche für jeden weiteren Datenframe inkrementiert werden, und, nach der Einstufung des ersten Endgeräts (1) als vertrauenswürdig, die Gültigkeit der weiteren Datenframes (14) vom ersten Endgerät (1) im zweiten Endgerät (2) durch den Abgleich des im weiteren Datenframe (14) enthaltenen inkrementieren Frame-Counters (FC+) mit dem Inkrement des Frame-Counters (FC) des diesem weiteren Datenframe (14) vorhergehenden Datenframes (12, 13) abgeglichen wird, und, der weitere Datenframe (14) bei Übereinstimmung des Frame-Counters (FC) mit dem inkrementierten Frame-Counter (FC+) als gültig eingestuft wird.

6. Verfahren nach mindestens einem der vorhergehenden Ansprüche, **dadurch gekennzeichnet, dass** es sich bei dem Frame-Counter (FC) in den Kopfdaten im zweiten Datenframe (12) und bei dem Frame-Counter (FC) in den Nutzdaten des zweiten Datenframes (12) um einen Frame-Counter für den Uplink (FCUp) handelt.

7. Verfahren nach Anspruch 6, **dadurch gekennzeichnet, dass** das zweite Endgerät (2) den zweiten Datenframe (12) empfängt und den Frame-Counter für den Uplink (FCUp) in den Kopfdaten mit dem Frame-Counter für den Uplink (FCUp) in den Nutzdaten abgleicht, sowie den Marker (20) im ersten Datenframe (11) mit dem Marker (20) in den Nutzdaten des zweiten Datenframes (12) abgleicht, und bei Übereinstimmung der Frame-Counter für den Uplink (FCUp) und der Marker (20) das erste Endgerät (1) als vertrauenswürdig einstuft.

8. Verfahren nach einem der Ansprüche 6 bis 7, **dadurch gekennzeichnet, dass** der zweite Datenframe (12), insbesondere in den Nutzdaten, einen Frame-Counter für den Downlink (FCDown) umfasst.

9. Verfahren nach mindestens einem der vorhergehenden Ansprüche, **dadurch gekennzeichnet, dass** es sich bei dem zweiten Endgerät (2) um ein mobiles Endgerät handelt, wobei sich das erste Endgerät (1) und das zweite Endgerät (2) mit einer Relativgeschwindigkeit zueinander bewegen.

10. Verfahren nach Anspruch 9, **dadurch gekennzeichnet, dass** die Relativgeschwindigkeit bis zu 70 Kilometer pro Stunde, insbesondere bis zu 50 Kilometer pro Stunde, beträgt.

11. Verfahren nach mindestens einem der Ansprüche 9 bis 10, **dadurch gekennzeichnet, dass** für den Datenaustausch die Relativgeschwindigkeit um weniger als 50%, insbesondere um weniger als 20%, insbesondere um weniger als 10% verringert wird, insbesondere keine Verringerung der Relativgeschwindigkeit stattfindet.

12. Anordnung zum Übertragen von Daten, umfassend
ein erstes Endgerät (1) sowie
ein zweites Endgerät (2), wobei
das erste Endgerät (1) und das zweite Endgerät (2) jeweils Kommunikationsmittel umfassen, um Datenframes, zwischen erstem Endgerät (1) und zweitem Endgerät (2) auszutauschen, wobei
zur Sicherung des Datenaustausches zwischen erstem Endgerät (1) und zweitem Endgerät (2) die Datenframes mit Frame-Counter (FC) versehen werden,
und wobei
zum Schutz von Datenübertragungen eine Synchronisierung von Frame-Counter (FC) nach einem Verfahren gemäß mindestens einem der vorhergehenden Ansprüche durchführbar ist.

## Claims

1. Method for synchronizing frame counters (FC) in order to protect data transmissions between
a first end-device (1), in particular an end point, in particular a sensor, in particular a smart meter, in particular a consumption meter, and
a second end-device (2), in particular a base station, in particular a data collector, in particular a mobile readout system, wherein
data frames are transferred between first end-device (1) and second end-device (2), wherein
the data frames are provided with frame counters (FC) to protect the data transfer between first end-device (1) and second end-device (2),
and wherein
the second end-device (2) sends a first data frame (11), in particular a wake-up data frame, to the first end-device (1), wherein
the first data frame (11) comprises a marker (20), in particular in the payload data,
the first end-device (1) sends back a second data frame (12) as an answer to the second end-device (2), wherein the second data frame (12) comprises a frame counter (FC) in the header data, and
the second data frame (12) comprises the frame counter (FC) and the marker (20) in the, in particular encrypted, payload data.

2. Method according to Claim 1, **characterized in that** the second end-device (2) receives the second data frame (12) and compares the frame counter (FC) in the header data with the frame counter (FC) in the payload data, and compares the marker (20) in the first data frame (11) with the marker (20) in the payload data of the second data frame (12), and designates the first end-device (1) as trusted on there being a match of the frame counters (FC) and of the markers (20).

3. Method according to Claim 2, **characterized in that** the marker (20) is a time stamp (t), where the time stamp (t) represents the current time at the time of sending the first data frame (11), and the time stamp (t) in the second data frame (12) is checked for plausibility, for which purpose the time of sending the first data frame (11) and delays in transmission and/or processing in the first end-device (1) are taken into account.

4. Method according to Claim 2, **characterized in that** the marker (20) is a token (Tk), wherein the second end-device (2) generates the token (Tk) before sending the first data frame (11) by generating once for the synchronization a random number, which acts as the token (Tk) in the first data frame (11).

5. Method according to at least one of Claims 2 to 4, **characterized in that** further data frames (14) from the first end-device (1) to the second end-device (2) comprise incremented frame counters (FC+), which are incremented for each further data frame, and, once the first end-device (1) is designated as trusted, the validity of the further data frames (14) from the first end-device (1) is compared in the second end-device (2) by comparing the incremented frame counter (FC+) contained in the further data frame (14) with the increment of the frame counter (FC) of the data frame (12, 13) preceding this further data frame (14), and the further data frame (14) is deemed valid if the frame counter (FC) and the incremented frame counter (FC+) are consistent.

6. Method according to at least one of the preceding claims, **characterized in that** the frame counter (FC) in the header data in the second data frame (12) and the frame counter (FC) in the payload data of the second data frame (12) is a frame counter for the uplink (FCUp) .

7. Method according to Claim 6, **characterized in that** the second end-device (2) receives the second data frame (12) and compares the frame counter for the uplink (FCUp) in the header data with the frame counter for the uplink (FCUp) in the payload data, and compares the marker (20) in the first data frame (11) with the marker (20) in the payload data of the second data frame (12), and designates the first end-device (1) as trusted on there being a match of the frame counters for the uplink (FCUp) and of the markers (20).

8. Method according to one of Claims 6 to 7, **characterized in that** the second data frame (12) comprises, in particular in the payload data, a frame counter for the downlink (FCDown).

9. Method according to at least one of the preceding claims, **characterized in that** the second end-device (2) is a mobile end-device, wherein the first end-device (1) and the second end-device (2) move at a relative speed to each other.

10. Method according to Claim 9, **characterized in that** the relative speed is up to 70 kilometres per hour, in particular up to 50 kilometres per hour.

11. Method according to at least one of Claims 9 to 10, **characterized in that** for the data transfer, the relative speed is reduced by less than 50%, in particular by less than 20%, in particular by less than 10%, and in particular no reduction in relative speed takes place.

12. Arrangement for transmitting data, comprising
a first end-device (1) and
a second end-device (2), wherein
the first end-device (1) and the second end-device (2) each comprise communication means in order to transfer data frames between first end-device (1) and second end-device (2), wherein
the data frames are provided with frame counters (FC) to protect the data transfer between first end-device (1) and second end-device (2),
and wherein
in order to protect data transmissions, frame counters (FC) can be synchronized in accordance with a method according to at least one of the preceding claims.

## Revendications

1. Procédé de synchronisation de compteurs de trames (FC), pour la protection de transmissions de données entre
un premier terminal (1), en particulier un point d'extrémité, en particulier un capteur, en particulier un compteur intelligent, en particulier un compteur de consommation, et
un deuxième terminal (2), en particulier une station de base, en particulier un collecteur de données, en particulier un système de lecture mobile, dans lequel des trames de données sont échangées entre le premier terminal (1) et le deuxième terminal (2), dans lequel
pour sécuriser l'échange de données entre le premier terminal (1) et le deuxième terminal (2), les trames de données sont pourvues de compteurs de trames (FC), et
dans lequel
le deuxième terminal (2) envoie une première trame de données (11), en particulier une trame de données d'éveil, au premier terminal (1), dans lequel
la première trame de données (11) comprend un marqueur (20), en particulier dans les données utiles,
en réponse, le premier terminal (1) renvoie une deuxième trame de données (12) au deuxième terminal (2), dans lequel
la deuxième trame de données (12) comprend un compteur de trames (FC) dans les données d'en-tête, et
la deuxième trame de données (12) comprend, dans les données utiles, en particulier cryptées, le compteur de trames (FC) ainsi que le marqueur (20).

2. Procédé selon la revendication 1, **caractérisé en ce que** le deuxième terminal (2) reçoit la deuxième trame de données (12) et compare le compteur de trames (FC) contenu dans les données d'en-tête au compteur de trames (FC) contenu dans les données utiles, et compare le marqueur (20) contenu dans la première trame de données (11) au marqueur (20) contenu dans les données utiles de la deuxième trame de données (12), et en cas de concordance entre le compteur de trames (FC) et le marqueur (20), le premier terminal (1) est classé comme étant digne de confiance.

3. Procédé selon la revendication 2, **caractérisé en ce que** le marqueur (20) est un marqueur temporel (t), dans lequel le marqueur temporel (t) représente le temps actuel à l'instant de l'envoi de la première trame de données (11), et la plausibilité du marqueur temporel (t) contenu dans la deuxième trame de données (12) est vérifiée, dans lequel sont pris en compte à cet effet l'instant d'envoi de la première trame de données (11) ainsi que des retards dans la transmission et/ou le traitement dans le premier terminal (1).

4. Procédé selon la revendication 2, **caractérisé en ce que** le marqueur (20) est un jeton (Tk), dans lequel le jeton (Tk) est généré par le deuxième terminal (2) avant l'envoi de la première trame de données (11), en générant une seule fois pour la synchronisation un nombre aléatoire qui sert de jeton (Tk) dans la première trame de données (11).

5. Procédé selon au moins l'une des revendications 2 à 4, **caractérisé en ce que** d'autres trames de données (14) comprennent des compteurs de trames (FC+) incrémentés du premier terminal (1) au deuxième terminal (2), lesquels sont incrémentés pour chaque autre trame de données et, après la classification du premier terminal (1) comme étant digne de confiance, la validité des autres trames de données (14) provenant du premier terminal (1) est comparée dans le deuxième terminal (2) par comparaison du compteur de trames incrémenté (FC+) contenu dans l'autre trame de données (14) avec l'incrément du compteur de trames (FC) de la trame de données (12, 13) précédant ladite autre trame de données (14), et l'autre trame de données (14) est considérée comme étant valide en cas de concordance entre le compteur de trames (FC) et le compteur de trames incrémenté (FC+).

6. Procédé selon au moins l'une des revendications précédentes, **caractérisé en ce que** le compteur de trames (FC) contenu dans les données d'en-tête dans la deuxième trame de données (12) et le compteur de trames (FC) contenu dans les données utiles de la deuxième trame de données (12) sont des compteurs de trames de liaison montante (FCUp).

7. Procédé selon la revendication 6, **caractérisé en ce que** le deuxième terminal (2) reçoit la deuxième trame de données (12) et compare le compteur de trames de liaison montante (FCUp) contenu dans les données d'en-tête au compteur de trames de liaison montante (FCUp) contenu dans les données utiles, et compare également le marqueur (20) contenu dans la première trame de données (11) au marqueur (20) contenu dans les données utiles de la deuxième trame de données (12), et en cas de concordance entre le compteur de trames de liaison montante (FCUp) et le marqueur (20), le premier terminal (1) est considéré comme étant digne de confiance.

8. Procédé selon l'une des revendications 6 à 7, **caractérisé en ce que** la deuxième trame de données (12) comprend, en particulier dans les données utiles, un compteur de trames de liaison descendante (FCDown).

9. Procédé selon au moins l'une des revendications précédentes, **caractérisé en ce que** le deuxième terminal (2) est un terminal mobile, dans lequel le premier terminal (1) et le deuxième terminal (2) se déplacent l'un par rapport à l'autre à une vitesse relative.

10. Procédé selon la revendication 9, **caractérisé en ce que** la vitesse relative est inférieure ou égale à 70 kilomètres par heure, en particulier inférieure ou égale à 50 kilomètres par heure.

11. Procédé selon au moins l'une des revendications 9 à 10, **caractérisé en ce que**, pour l'échange de données, la vitesse relative est réduite de moins de 50%, en particulier de moins de 20%, en particulier de moins de 10%, et en particulier aucune réduction de la vitesse relative ne se produit.

12. Dispositif de transmission de données, comprenant
un premier terminal (1) et
un deuxième terminal (2), dans lequel
le premier terminal (1) et le deuxième terminal (2) comprennent respectivement des moyens de communication pour échanger des trames de données entre le premier terminal (1) et le deuxième terminal (2), dans lequel
pour sécuriser l'échange de données entre le premier terminal (1) et le deuxième terminal (2), les trames de données sont pourvues de compteurs de trames (FC), et
dans lequel
pour protéger les transmissions de données, une synchronisation de compteurs de trames (FC) peut être réalisée conformément à un procédé selon au moins l'une des revendications précédentes.
